# EUROPÄISCHE PATENTANMELDUNG

(11) **EP 4 521 575 A1**
(43) Veröffentlichungstag der Anmeldung: **12.03.2025**
(21) Anmeldenummer: 23196375.2
(22) Anmeldetag: 08.09.2023
(51) Int. Cl.: H02H 3/087, H02H 7/18, H02H 9/04

(54) **SICHERHEITSSCHALTUNG FÜR EINEN AKKUPACK**

(71) Anmelder: Andreas Stihl AG & Co. KG, 71336 Waiblingen (DE)
(72) Erfinder: WILKA, Marcel, 73560 Böblingen (DE)
(74) Vertreter: Karzel, Philipp

(57) **Zusammenfassung**

Die Erfindung betrifft einen Akkupack mit zumindest einer Einzelzelle (11), die mit elektrischen Anschlüssen (2, 3) des Akkupacks (1) verbunden sind, derart, dass zwischen den elektrischen Anschlüssen (2, 3) eine Akkuspannung (U) bereitgestellt ist. Die Einzelzelle (11) des Akkupacks (1) liegt in einem Strompfad (5), in der ferner eine erste Schutzvorrichtung (4, 14, 34, 44) angeordnet ist. Die erste Schutzvorrichtung (4, 14, 34, 44) öffnet bei einem Kurzschlussstrom des Akkupacks (1) den Strompfad (5) irreversibel. Um auch bei Überspannung einen Schutz des Akkupacks (1) zu gewährleisten, ist eine zweite Schutzvorrichtung (20) aus einem Sperrelement (21) vorgesehen, das elektrisch in Sperrrichtung zwischen den Anschlüssen (2, 3) des Akkupacks (1) angeschlossen ist. Bei Überschreiten einer Durchbruchspannung (U_{D}) wird das Sperrelement (21) leitend, wodurch ein Kurzschlussstrom auftritt, der die erste Schutzvorrichtung (4, 14, 34, 44) öffnet und den Akkupack irreversibel abschaltet.

## Beschreibung

Die Erfindung betrifft einen Akkupack mit zumindest einer Einzelzelle. Die Einzelzelle weist einen Plus-Pol und einen Minus-Pol auf. Die Pole der Einzelzelle sind mit elektrischen Anschlüssen des Akkupacks elektrisch verbunden. Zwischen den elektrischen Anschlüssen des Akkupacks, die auch als Powerbars bezeichnet werden, steht die Akkuspannung des Akkupacks zur Verfügung. Innerhalb des Akkupacks ist zumindest ein Strompfad der die Einzelzelle umfasst. Im Strompfad ist ferner eine erste Schutzvorrichtung des Akkupacks vorgesehen, die zum Beispiel aus einer Schmelzsicherung oder einer anderen irreversibel auslösenden Schutzvorrichtung besteht. Die erste Schutzvorrichtung ist vorgesehen, bei einem unzulässigen Kurzschlussstrom im Akkupack den Strompfad des Akkupacks irreversibel zu öffnen, um so mögliche kritische Zustände des Akkupacks durch den Kurzschlussstrom zu vermeiden.

Die erste Schutzvorrichtung spricht auf einen Kurzschlussstrom an. Eine beim Aufladen des Akkupacks auftretende mögliche Überspannung kann durch die erste Schutzvorrichtung nicht verhindert werden. Die meisten Akkupacks haben daher ein Batteriemanagementsystem (BMS), welches eine Überwachung der Einzelzelle sowohl im Ladezyklus als auch im Entladezyklus gewährleistet. Ein derartiges Batteriemanagementsystem ist aufwendig und benötigt entsprechenden Bauraum.

Der Erfindung liegt die Aufgabe zugrunde, eine Schutzvorrichtung für einen Akkupack anzugeben, die nicht nur im Kurzschlussfall anspricht, sondern auch bei einer auftretenden Überspannung des Akkupacks anspricht.

Die Aufgabe wird dadurch gelöst, dass bei einem Akkupack mit einer bei einem Kurzschlussstrom auslösenden ersten Schutzvorrichtung eine zweite Schutzvorrichtung vorgesehen wird, welche als Sperrelement ausgebildet ist und elektrisch in Sperrrichtung zwischen dem Plus-Pol und dem Minus-Pol des Akkupacks angeschlossen ist. Das Sperrelement ist derart ausgebildet, dass es bei Überschreiten einer Durchbruchspannung leitend wird. Dabei ist die Anordnung so ausgebildet, dass die Durchbruchspannung des Sperrelementes kleiner ist als eine unzulässige Überspannung des Akkupacks und größer ist als die maximal zulässige Akkuspannung, insbesondere die Ladeschlussspannung des Akkupacks. Dies führt dazu, dass bei einer auftretenden Überspannung des Akkupacks das Sperrelement leitend wird und die elektrischen Anschlüsse des Akkupacks miteinander verbindet. Dies führt zu einem elektrischen Kurzschluss mit einem Kurzschlussstrom, der die erste Schutzvorrichtung auslöst. Da die erste Schutzvorrichtung den Strompfad im Akkupack irreversibel öffnet, ist der Akkupack nach Auftreten einer Überspannung funktionsunfähig. Die elektrische Verbindung zwischen der zumindest einen Einzelzelle im Akkupack zu den elektrischen Anschlüssen des Akkupacks ist durch die ausgelöste erste Schutzvorrichtung irreversibel unterbrochen. Eventuell auftretende kritische Zustände des Akkupacks können so vermieden werden.

In besonderer Ausgestaltung der Erfindung umfasst das Sperrelement ein passives Sperrelement. Insbesondere umfasst das Sperrelement ein Halbleiterelement. Vorteilhaft umfasst das Halbleiterelement eine Diode. In Weiterbildung der Erfindung umfasst das Sperrelement zwei elektrisch in Gegenrichtung geschaltete Dioden.

In besonderer Ausgestaltung der Erfindung umfasst das Sperrelement ein aktives Sperrelement, insbesondere ein aktives Halbleiterelement umfasst. Ein derartiges aktives Halbleiterelement kann ein MOSFET, ein Transistor, ein Triac oder dergleichen Halbleiterelement umfassen.

Die Durchbruchspannung des Sperrelementes ist größer als eine zwischen den elektrischen Anschlüssen des Akkupacks abgreifbare Ladeschlussspannung des Akkupacks und kleiner als eine unzulässige Überspannung des Akkupacks. Die Ladeschlussspannung des Akkupacks kann in einem Spannungsbereich von 25V bis 130V liegen, insbesondere bei 43V bis 45V liegen. Ganz insbesondere kann die Ladeschlussspannung des Akkupacks 86V bis 90V betragen.

Die Durchbruchspannung der zweiten Schutzvorrichtung, also des zwischen den Anschlüssen des Akkupacks angeordneten Sperrelementes, entspricht der Summe einer Ladeschlussspannung des Akkupacks plus einer vorgegebenen Toleranzspannung. Eine vorgegebene Toleranzspannung kann 0,5% bis 3 %, insbesondere 1% der maximal zulässigen Ladeschlussspannung des Akkupacks betragen. So kann die Toleranzspannung zwischen +50 mV und +500 mV, insbesondere bei +100 mV liegen.

Es kann vorteilhaft sein, die erste Schutzvorrichtung, also die irreversibel ansprechende Schutzvorrichtung, insbesondere räumlich zwischen der zweiten Schutzvorrichtung und der zumindest einen Einzelzelle des Akkupacks anzuordnen.

Die Erfindung ist auch in Akkupacks einsetzbar, die mehr als zwei elektrisch in Reihe liegende Einzelzellen umfasst. So kann die Anzahl der Einzelzellen sechs bis dreißig, insbesondere zwanzig, ganz insbesondere zehn elektrisch in Reihe liegende Einzelzellen umfassen. In weiterer Ausbildung der Erfindung umfasst der Akkupack mehrere Parallelzweige von jeweils zwei elektrisch in Reihe liegenden Einzelzellen. Insbesondere umfasst der Akkupack mehrere Parallelzweige von jeweils sechs bis dreißig, insbesondere zwanzig, ganz insbesondere zehn elektrisch in Reihe liegende Einzelzellen.

Umfasst der Akkupack mehr als zwei elektrisch in Reihe liegende Einzelzellen, ist es vorteilhaft, die erste Schutzvorrichtung im Strompfad zwischen den Einzelzellen des Akkupacks anzuordnen. Es kann auch vorteilhaft sein, die erste Schutzvorrichtung im Strompfad zwischen den Einzelzellen eines Parallelzweiges des Akkupacks anzuordnen.

Weitere Merkmale der Erfindung ergeben sich aus den weiteren Ansprüchen, der Beschreibung und der Zeichnung. Nachstehend sind die Merkmale der Erfindung anhand der Zeichnungen beschrieben, wobei die in der Beschreibung und den Zeichnungen offenbarten Merkmale untereinander kombinierbar sind. Ebenso können die Merkmale der Ansprüche unabhängig von deren Rückbezug untereinander und mit Merkmalen der Beschreibung und Merkmalen aus den Zeichnungen kombiniert werden.

Die Zeichnungen zeigen in
- Fig. 1: eine schematische Darstellung eines Akkupacks mit einer ersten Schutzvorrichtung im Strompfad zwischen zumindest einer Einzelzelle und den elektrischen Anschlüssen des Akkupacks sowie einer zweiten Schutzvorrichtung zwischen den elektrischen Anschlüssen des Akkupacks,
- Fig. 2: eine schematische Darstellung eines Akkupacks entsprechend Fig. 1 mit einer ersten Schutzvorrichtung zwischen dem Minus-Pol des Akkupacks und zumindest einer Einzelzelle sowie einer weiteren ersten Schutzvorrichtung zwischen der zumindest einen Einzelzelle und dem Plus-Pol des Akkupacks,
- Fig. 3: eine schematische Darstellung eines Akkupacks entsprechend Fig. 1 mit mehreren Parallelzweigen von jeweils zumindest zwei elektrisch in Reihe liegenden Einzelzellen und weitere erste Schutzvorrichtungen in der Reihenschaltung der Einzelzellen,
- Fig. 4: eine schematische Darstellung eines Sperrelementes zwischen den elektrischen Anschlüssen des Akkupacks,
- Fig. 5: eine schematische Darstellung eines Sperrelementes umfassend zwei Dioden, die elektrisch zueinander in Gegenrichtung geschaltet sind.

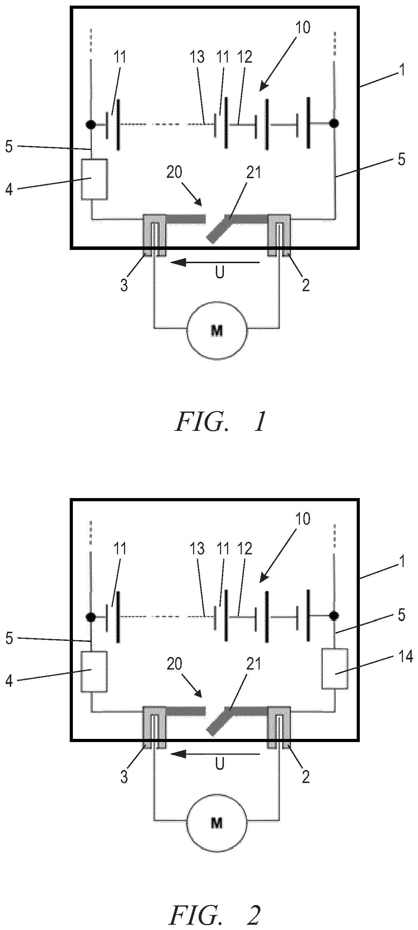

In Fig. 1 ist schematisch ein Akkupack 1 dargestellt, der elektrische Anschlüsse 2 und 3 aufweist. Im gezeigten Ausführungsbeispiel ist der Anschluss 2 der Plus-Pol des Akkupacks 1. Der Anschluss 3 ist der Minus-Pol des Akkupacks 1. An den Anschlüssen 2 und 3 des Akkupacks 1, die auch als Powerbars bezeichnet werden, kann zum Beispiel ein Motor M oder ein anderer elektrischer Verbraucher betrieben werden.

Im Akkupack 1 ist zumindest eine Einzelzelle 11 vorgesehen die einen Plus-Pol 12 und einen Minus-Pol 13 aufweist. Der Plus-Pol 12 der Einzelzelle 11 steht mit dem Anschluss 2 des Akkupacks in Verbindung. Der Minus-Pol 13 steht mit dem Anschluss 3 des Akkupacks in Verbindung.

Im gezeigten Ausführungsbeispiel nach Fig. 1 liegen mehrere Einzelzellen 11 in einer elektrischen Reihe 10 hintereinander. Die Einzelspannungen der Einzelzellen 11 addieren sich zu einer Akkuspannung U, die zwischen den elektrischen Anschlüssen 2 und 3 bereitgestellt ist. In Fig. 1 liegen in Reihe mit der zumindest einen Einzelzelle 11 mehrere weitere Einzelzellen 11. Eine Reihe kann sechs bis dreißig, insbesondere zwanzig, ganz insbesondere zehn elektrisch in Reihe liegende Einzelzellen 11 umfassen.

Bei einer Ladeschlussspannung einer Einzelzelle von 4,2V können so zwischen den Anschlüssen 2 und 3 maximale Akkuspannungen (Ladeschlussspannungen) im Bereich von 25V bis 130V, insbesondere 86V bis 90V, ganz insbesondere 42V bis 45V bereitgestellt werden. Die Einzelzellen 11 einer Reihe 10 sind insbesondere baugleich, d. h., die Einzelzellen 11 haben einen gleichen chemischen Aufbau und eine gleiche Ladeschlussspannung.

Im Ausführungsbeispiel nach Fig. 1 ist im Akkupack ein Strompfad 5 ausgebildet, der die Anschlüsse 2 und 3 über die Reihe 10 der Einzelzellen 11 miteinander verbindet. In diesem Strompfad 5 ist eine erste Schutzvorrichtung 4 vorgesehen. Im Ausführungsbeispiel nach Fig. 1 liegt die erste Schutzvorrichtung 4 zwischen dem Anschluss 3 des Akkupacks 1 und dem Minus-Pol 13 der ersten Einzelzelle 11.

Zwischen den Anschlüssen 2 und 3 des Akkupacks 1 ist eine zweite Schutzvorrichtung 20 angeordnet. Die zweite Schutzvorrichtung 20 umfasst ein Sperrelement 21, welches die Verbindung zwischen den Anschlüssen 2 und 3 des Akkupacks offenhält. Das Sperrelement 21 sperrt die elektrische Verbindung zwischen den Anschlüssen 2 und 3.

Steigt die Akkuspannung U zwischen den elektrischen Anschlüssen 2 und 3 des Akkupacks 1 über eine Durchbruchspannung U_{D} an, wird das Sperrelement 21 leitend. Die Durchbruchspannung U_{D} ist kleiner als eine unzulässige Überspannung U_{A} + ΔU des Akkupacks 1 und größer als die maximal zulässige Ladeschlussspannung Us des Akkupacks 1. ΔU ist eine vorgegebene Toleranzspannung. Die Toleranzspannung ΔU beträgt etwa 0,5% bis 3%, insbesondere 1% der maximal zulässigen Akkuspannung des Akkupacks 1, insbesondere der Ladeschlussspannung Us des Akkupacks 1. Die Toleranzspannung kann in einem Bereich von +50mV bis +500mV liegen, insbesondere bei +100mV liegen. Es gilt: U ≤ U_{S} < U_{D} ≤ U_{S} + ΔU.

Ist das Sperrelement 21 der zweiten Schutzvorrichtung 20 aufgrund einer unzulässigen Akkuspannung höher als U+ΔU leitend, wird der Strompfad 5 kurzgeschlossen. Dadurch steigt der Strom im Strompfad 5 auf einen Kurzschlussstrom an, der zu einem Ansprechen der ersten Schutzvorrichtung 4 führt. Die erste Schutzvorrichtung 4 öffnet irreversibel den Strompfad 5. Die zwischen den elektrischen Anschlüssen 2 und 3 des Akkupacks 1 abzugreifende Spannung ist "Null". Der der Akkupack 1 ist deaktiviert und lässt sich vom Benutzer nicht mehr in Betrieb nehmen.

Die erste Schutzvorrichtung 4 kann zum Beispiel eine Schmelzsicherung sein oder eine vergleichbare Schutzvorrichtung 4, die irreversibel den Strompfad 5 öffnet.

Der Akkupack 1 ist gegen einen Kurzschlussstrom über die erste Schutzvorrichtung 4 abgesichert. Gegen eine Überspannung ist der Akkupack 1 durch die zweite Schutzvorrichtung 20 abgesichert. Die zweite Schutzvorrichtung 20 wirkt mit der ersten Schutzvorrichtung 4 zusammen. Mit dem Auslösen der zweiten Schutzvorrichtung 20 bei Überspannung wird ein Kurzschluss erzeugt, auf den die erste Schutzvorrichtung 4 anspricht und den Akkupack 1 irreversibel abschaltet.

Die schematische Darstellung des Akkupacks 1 in Fig. 2 entspricht der Darstellung in Fig. 1. Für gleiche Teile sind gleiche Bezugszeichen verwendet.

In Abweichung zum Aufbau des Akkupacks 1 nach Fig. 1 ist in Fig. 2 eine weitere erste Schutzvorrichtung 14 angeordnet. Die weitere erste Schutzvorrichtung 14 kann zusätzlich zur ersten Schutzvorrichtung 4 oder alternativ zu dieser vorgesehen sein. Die weitere erste Schutzvorrichtung 14 ist zwischen dem Plus-Pol einer letzten Einzelzelle 11 der Reihe 10 und dem Anschluss 2 des Akkupacks angeordnet.

Wird sowohl die erste Schutzvorrichtung 4 als auch die weitere erste Schutzvorrichtung 14 im Strompfad angeordnet, ergibt sich eine Redundanz für die Auslösung im Kurzschlussfall.

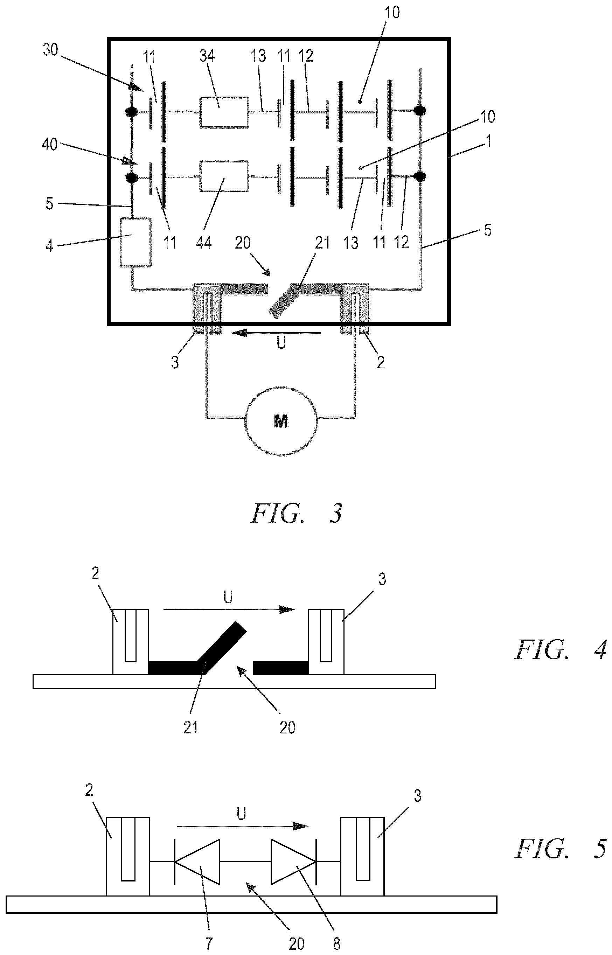

Der Aufbau des Akkupacks 1 nach Fig. 3 entspricht im Grundaufbau dem nach den Fig. 1 und 3, weshalb für gleiche Teile gleiche Bezugszeichnen verwendet sind. Im Ausführungsbeispiel nach Fig. 3 umfasst der Akkupack 1 mehrere Parallelzweige 30, 40 von jeweils mindestens zwei elektrisch in Reihe liegenden Einzelzellen 11. Die Parallelzweige 30 und 40 weisen jeweils eine gleiche Anzahl von Einzelzellen 11 auf. Die Einzelzellen 11 der Parallelzweige 30 und 40 haben bevorzugt eine gleiche Bauart, d.h., die Einzelzellen 11 eines Parallelzweiges 30 bzw. 40 haben einen gleichen chemischen Aufbau und eine gleiche Ladeschlussspannung.

Jeder Parallelzweig 30, 40 umfasst vorzugsweise sechs bis dreißig, insbesondere zwanzig, ganz insbesondere zehn elektrisch in Reihe liegende Einzelzellen 11. Die Anzahl der Einzelzellen 11 in Reihe bestimmt die maximale Akkuspannung U, die Anzahl der Parallelzweige bestimmt den maximalen Strom des Akkupacks 1. Es kann vorteilhaft sein, in jedem Parallelzweig 30, 40 eine weitere erste Schutzvorrichtung 34 bzw. 44 anzuordnen. Die weitere erste Schutzvorrichtung 34 bzw. 44 liegt insbesondere zwischen den Einzelzellen 11 einer Reihe 10 der Einzelzellen eines Parallelzweiges 30 bzw. 40. In Fig. 3 ist ergänzend die erste Schutzvorrichtung 4 vorgesehen, die zwischen dem Anschluss 3 des Akkupacks 1 und dem Minus-Pol 13 der Parallelzweige 30 und 40 angeordnet ist.

Zwischen den Anschlüssen 2 und 3 des Akkupacks 1 liegt in Abhängigkeit der Anzahl der in einem Parallelzweig 30 bzw. 40 verwendeten Einzelzellen 11 einer Reihe 10 eine Akkuspannung zwischen 25 V bis 130 V.

In Fig. 4 sind schematisch die Anschlüsse 2 und 3 des Akkupacks 1 dargestellt. Zwischen diesen Anschlüssen 2 und 3 ist das Sperrelement 21 der zweiten Schutzvorrichtung 20 vorgesehen. Das Sperrelement 21 kann als aktives Sperrelement ausgebildet sein. Ein derartiges aktives Sperrelement kann ein Relay oder auch ein aktives Halbleiterelement wie ein MOSFET, ein Transistor, ein Triac oder dergleichen Halbleiterelement umfassen.

In besonderer Ausgestaltung der Erfindung umfasst das Sperrelement 21 ein passives Sperrelement, insbesondere ein Halbleiterelement. Ein derartiges Halbleiterelement ist bevorzugt eine Diode. Die schematische Darstellung nach Fig. 4 umfasst schematisch auch eine Diode.

In Fig. 5 ist eine besondere Ausgestaltung des Sperrelementes 21 dargestellt. Das Sperrelement 21 umfasst zwei in Reihe liegende Dioden 7, 8, die entsprechend dem Ausführungsbeispiel nach Fig. 5 elektrisch in Gegenrichtung geschaltet sind. Die in Gegenrichtung geschalteten Dioden 7, 8 gewährleisten eine Funktion der zweiten Schutzvorrichtung 20 sowohl beim Entladen des Akkupacks 1 als auch beim Laden des Akkupack 1.

## Patentansprüche

1. Akkupack mit zumindest einer Einzelzelle (11), mit einem Plus-Pol (12) der Einzelzelle (11) und einem Minus-Pol (13) der Einzelzelle (11), die mit elektrischen Anschlüssen (2, 3) des Akkupacks (1) elektrisch verbunden sind, derart, dass zwischen den elektrischen Anschlüssen (2, 3) eine Akkuspannung (U) des Akkupacks (1) bereitgestellt ist, und mit einem zumindest die Einzelzelle (11) des Akkupacks (1) enthaltenden Strompfad (5) sowie einer ersten im Strompfad (5) des Akkupacks (1) angeordneten Schutzvorrichtung (4, 14, 34, 44), wobei die erste Schutzvorrichtung (4, 14, 34, 44) ausgebildet ist, bei einem Kurzschlussstrom des Akkupacks (1) den Strompfad (5) irreversibel zu öffnen,
**dadurch gekennzeichnet,**
**dass** eine zweite Schutzvorrichtung (20) aus einem Sperrelement (21) vorgesehen ist,
**dass** das Sperrelement (21) elektrisch in Sperrrichtung zwischen den Anschlüssen (2, 3) des Akkupacks (1) angeschlossen ist,
und **dass** das Sperrelement (21) bei Überschreiten einer Durchbruchspannung (U_{D}) leitend wird,
und die Durchbruchspannung (U_{D}) kleiner als eine unzulässige Überspannung (U_{S}+ΔU) des Akkupacks (1) und größer als die maximal zulässige Akkuspannung (U) des Akkupacks (1) gewählt ist.

2. Akkupack nach Anspruch 1,
**dadurch gekennzeichnet, dass** die maximal zulässige Akkuspannung (U) des Akkupacks (1) die Ladeschlussspannung (U_{D}) des Akkupacks (1) ist.

3. Akkupack nach Anspruch 1 oder 2,
**dadurch gekennzeichnet, dass** das Sperrelement (21) ein passives Sperrelement umfasst.

4. Akkupack nach einem der Ansprüche 1 bis 3,
**dadurch gekennzeichnet, dass** das Sperrelement (21) ein Halbleiterelement umfasst.

5. Akkupack nach einem der Ansprüche 1 bis 4,
**dadurch gekennzeichnet, dass** das Halbleiterelement eine Diode (7, 8) umfasst.

6. Akkupack nach einem der Ansprüche 1 bis 5,
**dadurch gekennzeichnet, dass** das Sperrelement (21) zwei elektrisch in Gegenrichtung geschaltete Dioden (7, 8) umfasst.

7. Akkupack nach einem der Ansprüche 1 bis 6,
**dadurch gekennzeichnet, dass** das Sperrelement (21) ein aktives Sperrelement umfasst, insbesondere ein aktives Halbleiterelement umfasst.

8. Akkupack nach einem der Ansprüche 1 bis 7,
**dadurch gekennzeichnet, dass** die Durchbruchspannung (U_{D}) des Sperrelementes (21) der Summe einer Ladeschlussspannung (Us) des Akkupacks (1) plus einer vorgegebenen Toleranzspannung (ΔU) entspricht.

9. Akkupack nach Anspruch 8,
**dadurch gekennzeichnet, dass** die vorgegebene Toleranzspannung (ΔU) 0,5% bis 3%, insbesondere 1% der maximal zulässigen Akkuspannung des Akkupacks (1) ist.

10. Akkupack nach einem der Ansprüche 1 bis 9,
**dadurch gekennzeichnet, dass** die erste Schutzvorrichtung (4) im Strompfad (5) zwischen der zweiten Schutzvorrichtung (20) und der zumindest einen Einzelzelle (11) des Akkupacks (1) angeordnet ist.

11. Akkupack nach einem der Ansprüche 1 bis 10,
**dadurch gekennzeichnet, dass** der Akkupack (1) mehr als zwei elektrisch in Reihe liegenden Einzelzellen (11) umfasst, insbesondere sechs bis dreißig, insbesondere zwanzig, ganz insbesondere zehn elektrisch in Reihe liegenden Einzelzellen (11) umfasst.

12. Akkupack nach einem der Ansprüche 1 bis 11,
**dadurch gekennzeichnet, dass** der Akkupack (1) mehrere Parallelzweige (30, 40) von jeweils zwei elektrisch in Reihe liegenden Einzelzellen (11) umfasst, insbesondere mehrere Parallelzweige (30, 40) von jeweils sechs bis dreißig, insbesondere zwanzig, ganz insbesondere zehn elektrisch in Reihe liegenden Einzelzellen (11) umfasst.

13. Akkupack nach Anspruch 1 bis 12,
**dadurch gekennzeichnet, dass** der Akkupack (1) mehr als zwei elektrisch in Reihe liegende Einzelzellen (11) umfasst, und die erste Schutzvorrichtung (14, 34, 44) im Strompfad (5) zwischen den Einzelzellen (11) des Akkupacks (1) angeordnet ist.

14. Akkupack nach Anspruch 11,
**dadurch gekennzeichnet, dass** die erste Schutzvorrichtung (34, 44) im Strompfad (5) zwischen den Einzelzellen (11) eines Parallelzweiges (30, 40) des Akkupacks (1) angeordnet ist.
